# EUROPÄISCHE PATENTSCHRIFT

(11) **EP 2 177 310 B1**
(45) Veröffentlichungstag und Bekanntmachung des Hinweises auf die Patenterteilung: **12.03.2014**
(21) Anmeldenummer: 09012725.9
(22) Anmeldetag: 08.10.2009
(51) Int. Cl.: B23Q 3/155, B23Q 3/157

(54) **Bearbeitungszentrum mit Werkzeugwechsler**
Machining centre with tool changer
Centre d'usinage avec changeur d'outils

(30) Priorität: 08.10.2008 DE 202008013235 U
(43) Veröffentlichungstag der Anmeldung: 21.04.2010
(73) Patentinhaber: Kämmerer, Sigrid, 47574 Goch-Pfalzdorf (DE)
(72) Erfinder: Kämmerer, Günther, 45468 Mühlheim/Ruhr (DE); Kämmerer, Michael, 47574 Goch-Pfalzdorf (DE)
(74) Vertreter: Schumacher, Horst

(56) Entgegenhaltungen:
- EP-A- 0 900 627
- EP-A- 1 704 958
- EP-A1- 0 310 953
- WO-A-03/057401
- DE-A1- 3 715 140
- DE-A1- 19 708 096
- DE-A1-102006 028 730
- DE-U1- 9 307 486
- US-A- 3 973 863
- US-A- 4 922 603
- US-A1- 2009 029 836

## Beschreibung

### TECHNISCHES GEBIET

Die Erfindung betrifft ein Bearbeitungszentrum mit Werkzeugmagazin und Werkzeugwechsler mit den Merkmalen des Oberbegriffs von Anspruch 1 siehe z.B. EP 17049581. Demnach ist ein Bearbeitungszentrum nach dem Gattungsbegriff von Anspruch 1 mit einem, vorzugsweise um mindestens eine Achse schwenkbaren, Bohr- oder Fräskopf ausgestattet wobei der Bohr- oder Fräskopf samt einem darin eingespannten Bohroder Fräswerkzeug entlang eines vorgegebenen Pfades verfahrbar. Das Bearbeitungszentrum ist ferner mit einem Werkzeugmagazin zur Aufnahme mindestens eines Bohr- oder Fräswerkzeuges versehen. Schließlich ist das Bearbeitungszentrum mit einer Werkzeugwechseleinrichtung zum Überführen eines Bohr- oder Fräswerkzeuges von einer Ruheposition des Werkzeugmagazins in eine Werkstückbearbeitungsposition des Bearbeitungszentrums versehen. Eine Werkzeugwechselvorrichtung dient dem Wechseln von Bohr- oder Fräswerkzeugen zwischen einem Bohr- oder Fräskopf eines Bearbeitungszentrums und einem Werkzeugmagazin für mindestens ein Bohr- und Fräswerkzeug. Schließlich dient ein Werkzeugmagazin in Verbindung mit einem Bearbeitungszentrum der Aufnahme mindestens eines Bohr- oder Fräswerkzeuges, welch letzteres einen Bearbeitungsbereich und einen Spannbereich aufweist. Das Werkzeugmagazin ist vorgesehen und geeignet zur Überführung des mindestens einen Bohr- oder Fräswerkzeuges von einer Ruheposition des Werkzeugmagazins in eine Werkstückbearbeitungsposition des Bearbeitungszentrums. Dabei weist das Werkzeugmagazin mindestens zwei Aufnahmemittel für je ein Bohr- oder Fräswerkzeug auf.

### TECHNOLOGISCHER HINTERGRUND

Maschinen mit beweglichen Bearbeitungsköpfen sind beispielsweise aus der EP 1 704 958 A1 bekannt. Die DE 93 07 486 U1 offenbart eine Arbeitsstation mit 2 Bearbeitungsköpfen und einem Werkzeugmagazin.

Spezielle Bohrvorrichtungen können der US 4,922,603 und der US 3,973,863 entnommen werden.

Ein- oder mehrachsige Bearbeitungszentren zum Bearbeiten von Werkstücken mittels eines Werkzeuges, wie eines Bohr- oder Fräswerkzeuges benötigen für verschiedene Bearbeitungsschritte an dem Werkstück unterschiedliche Werkzeuge, die mehr oder minder häufig gewechselt werden müssen. Hierzu dient ein Werkzeugmagazin zur Aufnahme von mindestens zwei Werkzeugen und ein so genannter Werkzeugwechsler, der es gestattet, ein Werkzeug aus dem Werkzeugmagazin entnehmen und es dem Bohr- oder Fräskopf des Bearbeitungszentrums zuzuführen und nach dem Bearbeitungsschritt auf umgekehrtem Weg das Werkzeug vom Bohr- oder Fräskopf des Bearbeitungszentrums an den richtigen Platz im Werkzeugmagazin zurück zu überführen. Bei bekannten Bearbeitungszentren mit Werkzeugwechsler und Werkzeugmagazin werden speziell geformte Werkzeughalter (nachfolgend als Werkzeugaufnahme bezeichnet) verwendet, um für alle Werkzeuge einen einheitlich geformten Spannbereich zu verwirklichen und das eigentliche Werkzeug mit seinem Bearbeitungsbereich daran/darin zu befestigen. Die Werkzeugaufnahme dient auch als Handlingshilfe für einen Greifer des Werkzeugwechslers, der die Werkzeugaufnahme erfasst, wenn das Werkzeug von der Spindel des Bohr- oder Fräskopfes gelöst wird, und der das Werkzeug vom Bohr- oder Fräskopf mittels eines Manipulators zum Werkzeugmagazin hin transportiert. Bei diesem Transport und der anschließenden Übergabe des Werkzeugs in das Werkzeugmagazin befindet sich der Bearbeitungsbereich des Werkzeugs in der Regel hängend nach unten. Die Werkzeugaufnahme befindet sich mit ihrem zu meist tellerartigen Greifbereich weiter oben. Das Werkzeug wird also in der Regel hängend und überwiegend quer zu seiner Drehachse transportiert und auch so in das Werkzeugmagazin eingehängt. Das Werkzeugmagazin kann z.B. als Ringmagazin oder in anderer Weise endlos geformt und z.B. durch eine Rotationsbewegung bewegbar sein. Entlang dieser Endlosstruktur des Magazins sind mit Abstand nebeneinander Magazinplätze für je ein Werkzeug vorgesehen. Die Magazinplätze haben einen über dem Magazinumfang gleichmäßig verteilten Abstand, der ausreichend groß ist, damit der Greifer des Werkzeugmanipulators aus einer Reihe mehrerer nebeneinander angeordneter Werkzeuge eines herausgreifen kann. Dieser seitliche Abstand ist größer als der Außenquerschnitt der Werkzeugaufnahmen und dieser wiederum ist - meist sogar deutlich - größer als der Durchmesser des Bearbeitungsbereiches des Werkzeuges. Werden eine Vielzahl von Werkzeugen für das Bearbeitungszentrum benötigt, so gestalten sich derartige Werkzeugmagazine also ziemlich raum greifend.

Um den zumeist mehrachsig bewegbaren Bohr- oder Fräskopf des Bearbeitungszentrums ausreichenden Bewegungsraum zu belassen, ist es erforderlich, den Abstand zwischen dem Werkzeugmagazin und dem Bohr- oder Fräskopf relativ groß zu wählen. Entsprechend große Distanzen muss der Manipulator des Werkzeugswechslers beim Werkzeugwechsel überwinden. Außerdem muss der Werkzeugwechsler sehr exakt positionierbar sein, um das Werkzeug aus der Spindel des Bohr- oder Fräskopfes zu entnehmen und in dem Magazin zu positionieren. Hierfür ist ein erheblicher mechanischer und steuerungstechnischer Aufwand zu treiben.
Ein Bearbeitungszentrum mit einem verfahrbaren Fräskopf und einer Werkzeugwechselvorrichtung kann der DE 197 08 096 A1 entnommen werden. Die dort beschriebene Vorrichtung umfasst ein Werkzeugmagazin bei dem die Werkzeuge umfangsseitig angeordnet sind und welches um eine senkrechte Achse drehbar ist. Ein Werkzeugwechsel erfolgt durch Verfahren des Fräskopfes. Eine zusätzlich vorgesehene Dreh- und/oder Schwenkbewegung der Wechselvorrichtung dient dem Austausch von Werkzeugen. Die Werkzeuge sind dabei in einem trommelartigen Magazin in mehreren Ebenen umfangsseitig angeordnet. Sie werden mit der Werkzeugspitze voran in den Werkzeugspeicher hinein geschoben. Werkzeugwechselvorrichtungen werden in der EP 0 900 627 A2, der EP 0 310 953 und in der DE 10 2006 028 730 A1 beschrieben.

Der DE 102 61 701 A1 kann ebenfalls eine Werkzeugwechselvorrichtung entnommen werden, die in zwei Richtungen, nämlich horizontal und vertikal, linear verfahrbar und darüber hinaus über einen Rotationsantrieb drehbar ist. Die Bewegung der Wechselvorrichtung findet zwischen einer Ruheposition und einer Übergabeposition statt und soll einen Wechsel des Werkzeugs ohne Bewegung des Fräskopfes ermöglichen. Die hier beschriebene Wechselvorrichtung würde demnach stets zusammen mit beispielsweise einem Fräskopf mitbewegt werden, wodurch die Gefahr einer Behinderung der Bearbeitung gegeben ist. Bearbeitungszentren werden in der WO 03/057401 A2 und in der US 2009/0029836 A1 beschrieben.

Ein Bearbeitungszentrum mit einem in den Arbeitsbereich hineinbewegbaren Werkzeugmagazin, welches vorzugsweise als Endloskette an einem Träger ausgeführt ist, wird in der DE 199 19 446 A1 beschrieben. Die Bewegbarkeit des Magazins besteht hier aus einer Schwenkbewegung um eine ortsfeste Drehachse.

Ein scheibenförmiger Werkzeugspeicher, in dem die Werkzeugaufnahmeschächte so angeordnet sind, dass ihre Flucht nicht durch das Zentrum der Scheibe verläuft, wird in der DD 242 994 A1 beschrieben.

### DARSTELLUNG DER ERFINDUNG

Der Erfindung liegt das Problem zugrunde, einen weniger aufwendigen Werkzeugwechsel zu verwirklichen. Zur Lösung dieser Aufgabe wird ein Bearbeitungszentrum mit den Merkmalen des Anspruchs 1. Dabei basiert die Erfindung auf dem Grundgedanken einer direkten Werkzeugübergabe zwischen der Spindel des Bohr oder Fräskopfes und der für das betreffende Werkzeug in dem Werkzeugmagazin vorgehaltenen Position. Dieser Grundgedanke wird erfindungsgemäß auf verschiedene Weise umgesetzt:

Hinsichtlich eines gattungsgemäßen Bearbeitungszentrums sieht die Erfindung Folgendes vor: Es ist ein Magazinmanipulator vorgesehen, der das ganze Werkzeugmagazin von einer Ruheposition, in der sich das Werkzeugmagazin also ausreichend weit entfernt von dem Bohr- oder Fräskopf des Bearbeitungszentrums befindet, in eine Werkzeugübergabeposition, in der das Werkzeug von dem Bohr- oder Fräskopf direkt aus dem Werkzeugmagazin übernommen wird, überführt - und umgekehrt. Dieser Magazinmanipulator kann hinsichtlich seiner Bewegungsfreiheitsgrade darauf beschränkt sein, dass Werkzeugmagazin durch eine rotative oder lineare Bewegung in eine solche Position zu verlagern, in der der Bohr- oder Fräs-kopf direkt auf die Stelle im Werkzeugmagazin zugreift, an der sich der gewünschte Bohr- oder Fräskopf befindet, bzw. in die das zuletzt benutzte Bohr- oder Fräswerkzeug zurück überführt werden soll. In besonders einfach gelagerten Fällen, in denen der Bohr- oder Fräskopf des Bearbeitungszentrums über besonders viele Bewegungsfreiheitsgrade verfügt, kann es ausreichen, das Werkzeugmagazin an einem festen Ort zu belassen und die Werkzeugposition im Werkzeugmagazin direkt mit dem Bohr- oder Fräskopf anzufahren. Demgemäß sieht die Erfindung vor, dass der Bohr- oder Fräskopf von einer Werkstückbearbeitungsposition in eine Werkzeugübergabeposition schwenk- und/oder verfahrbar ist. Zu diesem Zweck befindet sich das Bohr- oder Fräswerkzeug in der Werkzeugübergabeposition in seiner Aufnahmeposition in dem Werkzeugmagazin, so dass die direkte Übergabe des Werkzeuges von Werkzeugmagazin zum Bohr- oder Fräskopf ohne zwischengeschalteten Greifer eines Werkzeugmanipulators erfolgt. Der Magazinmanipulator kann das Werkzeugmagazin gewünschtenfalls aber auch bis in eine Werkstückbearbeitungsposition des Bohr- oder Fräskopfes oder in die unmittelbare Nähe der Werkstückbearbeitungsposition hinein verfahren, so dass in einem Extremfall die Werkstückbearbeitungsposition mit der Werkzeugübergabeposition übereinstimmen. Der Magazinmanipulator kann also gewünschtenfalls minimale bis maximale Bewegungsabläufe verwirklichen (MH2TM) (Millinghead to Toolmagazine) oder (TM2MH) (Toolmagazine to Millinghead). In jedem Fall wird sichergestellt, dass der Bohr- oder Fräskopf das Werkzeug unmittelbar an dem vorgesehenen Platz im Werkzeugmagazin übergibt bzw. es aus seinem Platz im Werkzeugmagazin übernimmt. Vorzugsweise werden zur Werkzeugübergabe jedoch beide Systeme für die Werkzeugübergabe auf einander zu bewegt.

Durch die Erfindung wird nicht nur die komplexe Mechanik des Werkzeugmanipulators eingesperrt, sondern auch die Steuerung vereinfacht, denn der Bohr- oder Fräskopf des Bearbeitungszentrums wird hoch präzise bewegt, um ein Werkstück zu bearbeiten. Seine Steuerung wird für die Werkzeugübergabefunktion an das Werkzeugmagazin erweitert.

Hinsichtlich einer gattungsgemäßen Werkzeugwechselvorrichtung sieht die Erfindung vor, dass ein Werkzeugmagazinmanipulator vorgesehen ist, der das ganze Werkzeugmagazin von einer Ruheposition in eine Werkzeugübergabeposition und umgekehrt überführt. Ferner ist ein Werkzeugmagazin vorgesehen, das Aufnahmemittel für einen Bearbeitungsbereich des mindestens einen Bohr- oder Fräswerkzeuges aufweist, wobei die Aufnahmemittel je eine Einschuböffnung für den Bearbeitungsbereich des Rohr- oder Fräswerkzeuges aufweisen. Außerdem ist ein den Spannbereich des Bohr- oder Fräswerkzeuges außerhalb eines Aufnahmeraumes haltendes Haltemittel für das Bohr- oder Fräswerkzeug vorgesehen. Durch eine derartige Werkzeugwechselvorrichtung ergibt sich wiederum eine direkte Übergabe eines Werkzeuges zwischen dem Bohr- oder Fräskopf des Bearbeitungszentrums und dem für das Werkzeug vorgesehenen Platz im Werkzeugmagazin. Auch hier kann der "Magazinmanipulator" die ganze Bandbreite von Bewegungsmöglichkeiten beinhalten wie bei dem Bearbeitungszentrum nach Anspruch 1.

Das Werkzeugmagazin weist eine eine Drehachse definierende Längserstreckungsrichtung auf, um die das Werkzeugmagazin drehbar ist. Das Werkzeugmagazin weist einander sich kreuzende Werkzeugaufnahmeschächte auf, die sich quer zu der Drehachse und auf die Drehrichtung bezogen im Winkel zu einander von einer Einschuböffnung an der Peripherie des Werkzeugsmagazins ausgehend in das Werkzeugmagazin hinein gerichtet erstrecken. - Hierdurch wird ein Werkzeugmagazin verwirklicht, dass es auf engstem Unterbringungsraum für mehrere Werkzeuge gestattet, die Werkzeuge direkt von ihrer Position im Werkzeugaufnahmeschacht an den Bohr- oder Fräskopf des Bearbeitungszentrums zu übergeben.

Schließlich löst die Erfindung die ihr zugrunde liegende Aufgabe hinsichtlich eines Verfahrens dadurch, dass in einem Werkzeugmagazin axial eingeschobene Bohr- oder Fräswerkzeuge durch Überführen des ganzen Werkzeugmagazins in eine Werkzeugübergabeposition bewegt werden, in der der Bohr- oder Fräskopf des Bearbeitungszentrums sich das Werkzeug unmittelbar abholt, oder es in dieser Werkzeugübergabeposition an den endgültigen Platz im Werkzeugmagazin unmittelbar abgibt.

### Es ist nun auf verschiedene Weise möglich, die Erfindung auszuführen:

Wenn der Werkzeugmanipulator einen das Werkzeugmagazin haltenden Arm oder Ausleger aufweist, wird es dadurch möglich, das Werkzeugmagazin ohne Behinderung des Bohr- oder Fräswerkzeuges des Bearbeitungszentrums während der Werkstückbearbeitung zu lagern und auf einfachem Wege die Werkzeuge dem Bohr- oder Fräskopf zuzuführen.

Wenn das Werkzeugmagazin entlang einer Führung zwischen einer Ruheposition und einer Werkzeugübergabeposition verfahrbar ist, kann das Werkzeugmagazin in geringem Abstand vom Bohr- und Fräskopf in Ruheposition gehalten werden, ohne die Beweglichkeit des Bohr- oder Fräskopfes einzuschränken.

Wenn der Werkzeugmanipulator einen Rotationsantrieb für das Werkzeugmagazin aufweist, kann dadurch eine besonders raumsparende Werkzeugunterbringung im Werkzeugmagazin erreicht werden.

Wenn die Aufnahmemittel des Werkzeugmagazins auf dem Umfang des Werkzeugmagazins verteilt angeordnete Einschuböffnungen für den Bearbeitungsbereich der Bohr- oder Fräswerkzeuge aufweisen, kann dadurch eine sehr raumsparende Werkzeugunterbringung und ein mithin kompaktbauendes Werkzeugmagazin erreicht werden.

Wenn die Aufnahmemittel des Werkzeugmagazins für eine Reihe von Bohr- oder Fräswerkzeugen entlang einer Magazinachse so angeordnet sind, dass zwischen benachbarten Aufnahmemitteln einer Werkzeugreihe weitere, sich mit den Werkzeugaufnahmemitteln einer Linie kreuzende Werkzeugaufnahmemittel befinden, kann dadurch die Dichte der Werkzeugunterbringung im Werkzeugmagazin erhöht werden.

Wenn das Werkzeugmagazin mit Ausbuchtungen zur Aufnahme der Einschuböffnungen für Bohr- oder Fräswerkzeuge versehen ist, wird dadurch der Zugriffraum des Bohr- oder Fräswerkzeuges beim Einspannen des Werkzeugspannbereiches vergrößert.

Wenn die Werkzeugaufnahmemittel des Werkzeugmagazins Anschlag- oder Rastmittel derart aufweisen, dass sie sich mit entsprechenden Gegenrastmitteln der Bohr- oder Fräsköpfe verbinden, wird dadurch das Erreichen einer bestimmten Sollposition des Werkzeugs im Werkzeugaufnahmeraum des Werkzeugmagazins verbessert.

Wenn das Werkzeugmagazin als Ganzes von dem Magazinmanipulator lösbar gestaltet ist, können Reservewerkzeugmagazine bestückt werden, während ein anderes Werkzeugmagazin sich noch in Benutzung in dem Bearbeitungszentrum oder dem Werkzeugwechsler befindet.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel eines Bearbeitungszentrums eines Werkzeugwechslers und eines Werkzeugmagazins dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In den Zeichnungen zeigen:
- Fig. 1: ein Bearbeitungszentrum mit mehrachsig schwenkbarem Bohr- oder Fräskopf und mehreren Verfahrebenen mit einem Werkzeugmagazin und einem Magazinmanipulator in perspektivischer Ansicht in Werkstückbearbeitungsposition des Bohr- oder Fräskopfes;
- Fig. 2A: von dem Bearbeitungszentrum nach Fig. 1 eine Detailansicht des Werkzeugmagazins und des Bohr- und Fräskopfes in einer Werkstückübergabeposition;
- Fig. 2B: ein Detail des Werkzeugmagazins nach Fig. 2A;
- Fig. 2C: ein Detail des Werkzeugmagazins nach Fig. 2B;
- Fig. 3: das Werkzeugmagazin nach Figuren 1 bis 2C mit dem Magazinmanipulator nach Fig. 1 in Explosionsdarstellung; sowie
- Fig. 4A - D: das Werkzeugmagazin nach Fig. 1 bis 3 in perspektivischer Darstellung (Fig. 4A), in Seitenansicht (Fig. 4B), in Vertikalschnittansicht entlang der Linie A-A gemäß Fig. 4B (Fig. 4C) sowie in einer weiteren Längsschnittdarstellung (Fig. 4D) entlang der Linie B-B gemäß Fig. 4B.

### DETAILLIERTE BESCHREIBUNG EINES AUSFÜHRUNGSBEISPIELES

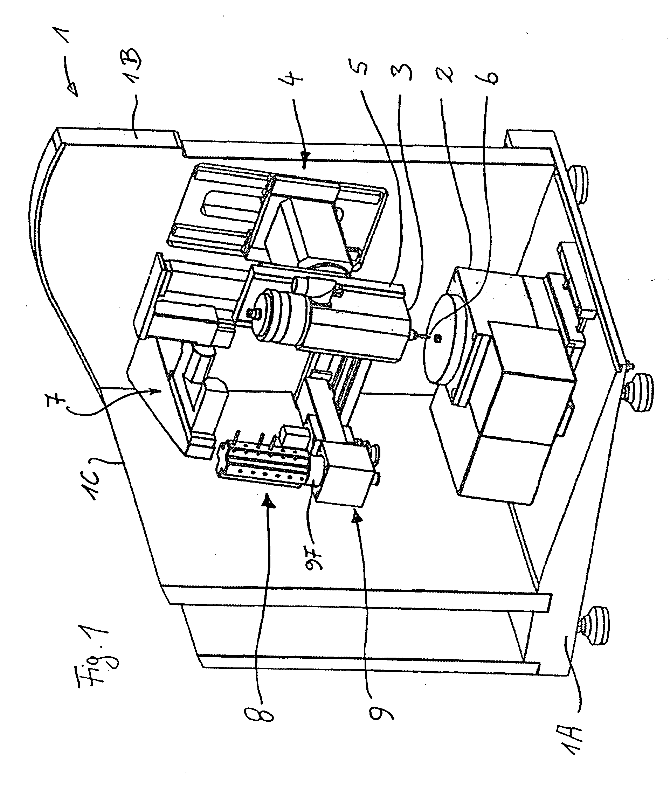

Aus Figur 1 ist ein Bearbeitungszentrum 1 ersichtlich, wie es grundsätzlich bereits aus der EP 1 647 354 B1 bekannt ist. Eine leicht schräg geneigte Bodenplatte 1A trägt einen mehrachsig bewegbaren Werkstückbearbeitungs- und Spanntisch 2. Eine Geräteträgerwand 1B trägt eine Schwenk- und Führungseinheit 4 eines damit verbundenen Bohr- oder Fräskopfes 3, der über eine weitere Bohr- oder Fräskopfführung 5 parallel zur Werkzeugrotationsachse des Bohr- oder Fräskopfes 3 in Achsrichtung vor- und zurückverfahrbar ist. Der Bohr- oder Fräskopf 3 trägt ein in ihm eingespanntes Bohr- oder Fräswerkzeug 6, 6A, 6B, ... Eine an sich bekannte Vermessungseinheit 7 gestattet eine lasergestützte Vermessung des Bearbeitungsbereiches des Bohr- oder Fräswerkzeuges 6, 6A, 6B, ... bezüglich des Bohr- oder Fräskopfes 3, so dass jederzeit bekannt ist, wie weit der Bearbeitungsbereich 6' des Bohr- oder Fräswerkzeuges 6 aus dem Bohr- oder Fräskopf 3 hervorsteht.

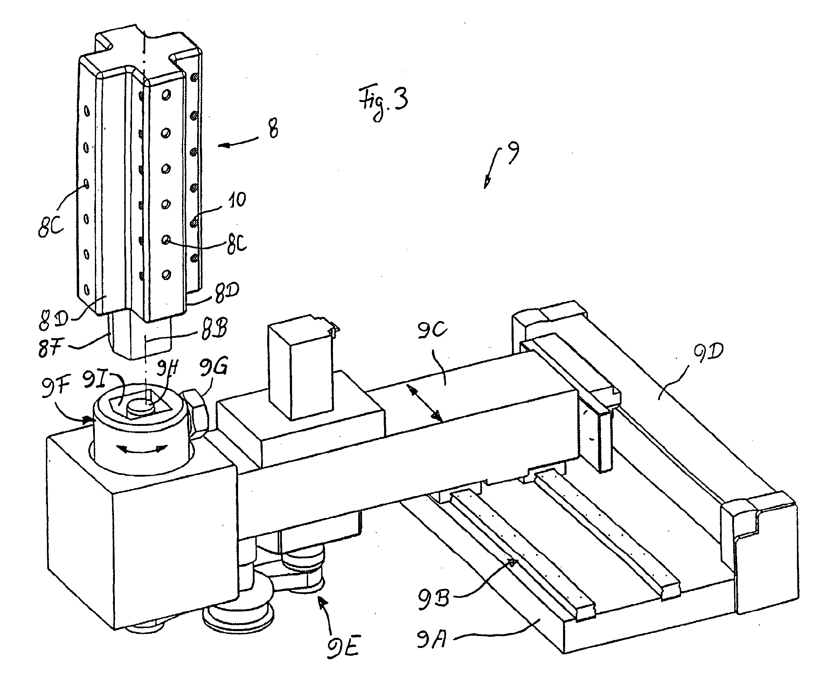

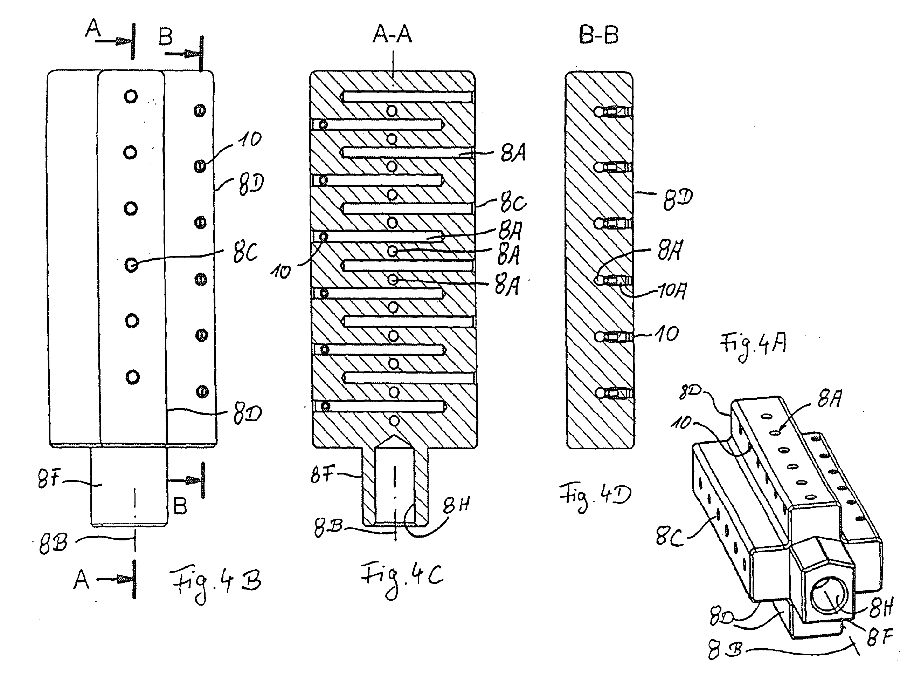

Ein im Zusammenhang mit Figur 3 näher beschriebener Magazinmanipulator 9 trägt ein im Zusammenhang mit Figur 4 näher beschriebenes Werkzeugmagazin, welches mehrere - in dem dargestellten Ausführungsbeispiel bis zu 24 - Bohr- oder Fräswerkzeuge aufnimmt. Das Werkzeugmagazin 8 befindet sich in der in Figur 1 dargestellten Werkstückbearbeitungsposition in einer Ruheposition, d.h. ausreichend weit außerhalb des von dem Bohr- oder Fräswerkzeug benötigten Bewegungsfreiraumes.

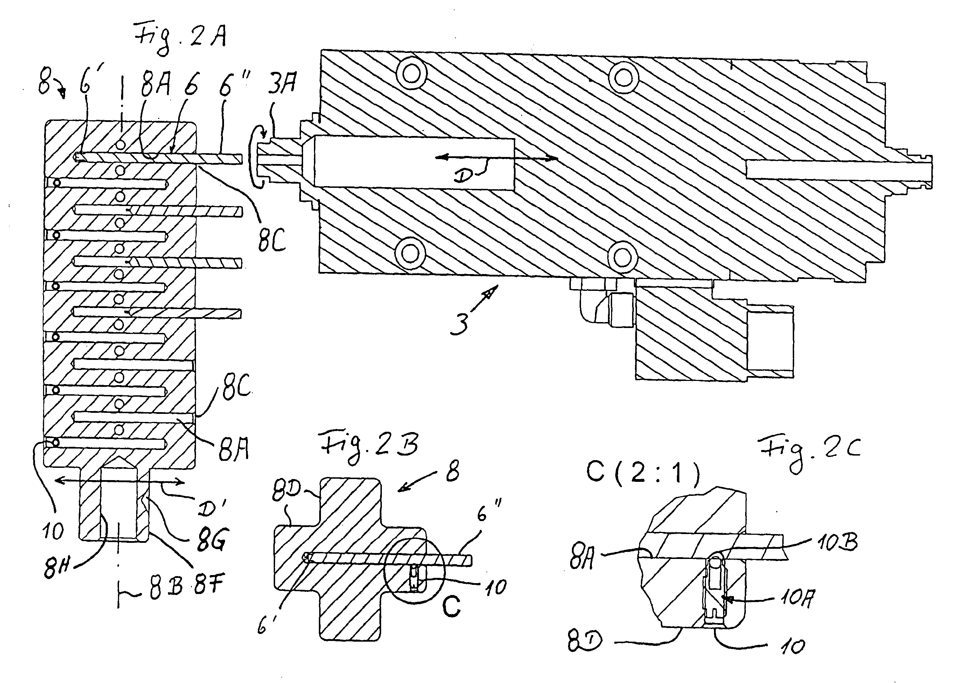

Aus Figur 2A ist die Schwenkposition des Bohr- oder Fräskopfes 3 bezüglich des Werkzeugmagazins 8 kurz vor bzw. nach einer Werkzeugübergabe ersichtlich. Das Spannfutter 3A des Bohr- oder Fräskopfes 3 ist koaxial ausgerichtet zum Spannbereich 6" eines Bohr- oder Fräswerkzeuges 6 dessen Bearbeitungsbereich 6" sich innerhalb eines Werkzeugaufnahmeschachtes 8A des Werkzeugmagazins 8 befindet, welcher sich etwa rechtwinklig zu einer Drehachse 8B des Werkzeugmagazins 8 von einer Einschuböffnung 8C ausgehend in das Werkzeugmagazin 8 hineinerstreckt. Durch koaxiales Bewegen des Bohr- oder Fräskopfes 3 entlang des Doppelpfeiles D und/oder durch Verlagern des Werkzeugmagazins 8 entlang des Doppelpfeiles D' rechtwinklig zur Drehachse 8B des Werkzeugmagazins werden das Bohr- oder Fräswerkzeug 6 mit seinem Spannbereich 6" und das Spannfutter 3A zusammengeführt.

Wie aus Figuren 2B und 2C ersichtlich, gestattet es ein Rastmittel 10A, z.B. in Gestalt einer federbelasteten Kugel, in einen Anschlag 10B des Bohr- oder Fräswerkzeuges 6 einzugreifen. Dadurch wird zum Einen das Beibehalten der Sollposition des Bohr- oder Fräswerkzeuges 6 in dem Werkzeugaufnahmeschacht 8A des Werkzeugmagazins 8 sichergestellt und zum Anderen erreicht, dass die Position des Werkzeugspannbereiches 6" stets wohl definiert ist, d.h. insbesondere der Überstand dieses Bereiches außerhalb der Einschuböffnung 8C des Werkzeugmagazins 8. Zu diesem Zweck kann als Gegenrastmittel 10B oder Anschlag eine umlaufende Nut oder Abflachung oder Ähnliches des Bohr- oder Fräswerkzeuges in einer vorgegebenen Position dienen.

Aus der Figur 3 ist ersichtlich, dass der Magazinmanipulator 9 mittels einer Basis 9A an der Geräteträgerwand 1B des Bearbeitungszentrums 1 befestigbar ist und Führungen 9B für einen Ausleger 9C und einen Linearantrieb 9D für ein Verfahren des Auslegers 9C entlang der Führungen 9D aufweist. Der Ausleger 9C trägt einen Rotationsantrieb 9E für einen Koppler 9F, der in vertauschungssicherer Weise das Werkzeugmagazin 8 trägt. Mithin ermöglicht der Magazinmanipulator 9 eine Linearverlagerung des Auslegers 9C und damit des Werkzeugmagazins 8 sowie eine Rotation des Werkzeugmagazins 8 um seine Drehachse 8B.

Aus Figuren 2A und 3 sowie 4A ist ersichtlich, dass das Werkzeugmagazin 8 als Ganzes von dem Magazinmanipulator 9 lösbar gestaltet ist. Hierzu ist ein Haltezapfen 8F mit unsymmetrischer Kontur vorgesehen um Nichtverdrehbarkeit zu gewährleisten. Ein Sicherungselement 9G des Magazinmanipulators 9 greift in einen Anschlag 8G des Haltezapfens 8F des Werkzeugmagazins 8 ein um eine unbeabsichtigte Positionsveränderung des Werkzeugmagazins trotz dessen Lösbarkeit zu verhindern. Ein Passzapfen 9H im Inneren einer Haltezapfenaufnahme 9I des Kopplers 9F wird von einer Passzapfenaufnahme 8H des Werkzeugmagazins 8 aufgenommen um die Passflächen im Bereich der lösbaren Magazinankopplung und damit die Tragkraft dieser Kopplung zu erhöhen.

Wie aus Figuren 4A bis 4D ersichtlich ist, weist das dargestellte und insoweit bevorzugte Werkzeugmagazin 8 insgesamt 24 Werkzeugaufnahmeschächte 8A auf, die sternförmig, d.h. umfangsverteilt bezüglich der Drehachse 8B des Werkzeugmagazins 8 erstreckt sind und sich in dem dargestellten und insoweit bevorzugten Ausführungsbeispiel im Bereich der Drehachse 8B kreuzen. Da in dem Ausführungsbeispiel eine Viererteilung des Werkzeugmagazins in Umfangsrichtung vorgesehen ist, weisen zwei in derselben Reihe angeordneten Werkzeugaufnahmeschächte 8A den vierfachen Abstand von einander auf, der für die Aufnahme des Bearbeitungsbereiches 6' eines Bohr- oder Fräswerkzeuges maximal erforderlich ist. Entsprechend weit von einander entfernt befinden sich die Spannbereiche 6" jedes Bohr- oder Fräswerkzeuges 6, so dass diese, wie aus Figur 2A ersichtlich, behinderungsfrei von dem Spannfutter 3A des Bohr- oder Fräskopfes greifbar sind, während sich der Bearbeitungsbereich jedes Werkzeuges im Werkzeugmagazin geschützt innerhalb des Werkzeugaufnahmeschachtes untergebracht ist (Fig. 2A). Die die Einschuböffnungen 8C einer Reihe von Einschuböffnungen 8C aufweisenden Ausbuchtungen 8D des Werkzeugmagazins 8 tragen im etwa rechten Winkel zu den Werkzeugaufnahmeschächten 8A Rastmittelaufnahmebohrungen 8E, in denen an sich bekannte Rastmittel 10A aufgenommen werden.

**BEZUGSZEICHENLISTE**

| | | | |
|---|---|---|---|
| 1 | Bearbeitungszentrum | 8D | Ausbuchtung |
| 1A | Bodenplatte | 8E | Rastmittelaufnahmebohrung |
| 1B | Geräteträgerwand | 8F | Haltezapfen |
| 1C | Versteifungswand | 8G | Anschlag |
| 2 | Bearbeitungs- und Spanntisch | 9 | Magazinmanipulator |
| 3 | Bohr- oder Fräskopf | 9A | Basis |
| 3A | Spannfutter | 9B | Führungen |
| 4 | Schwenk- und Führungseinheit | 9C | Ausleger |
| 5 | weitere Bohr- oder Fräskopffüh- | 9D | Linearantrieb |
| | rung | 9E | Rotationsantrieb |
| 6 | Bohr- oder Fräswerkzeug | 9F | Koppler |
| 6' | Bearbeitungsbereich | 9G | Sicherungselement |
| 6" | Spannbereich | 9H | Passzapfen |
| 6A-C | Bohr- oder Fräswerkzeug | 9I | Zapfenaufnahme |
| 7 | Vermessungseinheit | 10A | Rastmittel |
| 8 | Werkzeugmagazin | 10B | Gegenrastmittel |
| 8A | Werkzeugaufnahmeschacht | | |
| 8B | Drehachse | D | Doppelpfeil |
| 8C | Einschuböffnung | D' | Doppelpfeil |

## Patentansprüche

1. Bearbeitungszentrum
mit einem Bohr- oder Fräskopf (3), der samt einem Bohr- oder Fräswerkzeug (6) verfahrbar ist,
mit einem Werkzeugmagazin (8) zur Aufnahme mindestens eines einen Spannbereich (6") aufweisenden Bohr- oder Fräswerkzeuges, sowie mit einer einen Magazinmanipulator umfassenden Werkzeugwechseleinrichtung zum Wechseln von Bohr-oder Fräswerkzeugen (6) zwischen dem Bohr- oder Fräskopf (3) und dem Werkzeugmagazin (8) durch direktes und unmittelbares Überführen des Bohr- oder Fräswerkzeuges (6) von einer Ruheposition in eine Werkzeugübergabeposition,
wobei ein das ganze Werkzeugmagazin (8) von der Ruheposition in die Werkzeugübergabeposition und umgekehrt überführender Magazinmanipulator (9) vorgesehen ist und
der Bohr- oder Fräskopf (3) von einer Werkstückbearbeitungsposition in die Werkzeugübergabeposition schwenk- und/oder verfahrbar ist, wobei sich das Bohr- oder Fräswerkzeug in einer Aufnahmeposition in dem Werkzeugmagazin (8) befindet, **dadurch gekennzeichnet, dass** das Werkzeugmagazin (8) um eine eine Drehachse (8B) definierende Längserstreckungsrichtung drehbar gestaltet ist und einander sich kreuzende Werkzeugaufnahmeschächte (8A) aufweist, die sich quer zur Drehachse (8B) und im Winkel zu einander von einer Einschuböffnung (8C) an der Peripherie des Werkzeugmagazins (8) ausgehend in das Werkzeugmagazin (8A) hineinerstrecken.

2. Bearbeitungszentrum nach Anspruch 1, **dadurch gekennzeichnet, dass** das Werkzeugmagazin mindestens zwei Aufnahmemittel für je ein Bohr- oder Fräswerkzeug (6) umfasst, und dass die Aufnahmemittel des Werkzeugmagazins auf dem Umfang des Werkzeugmagazins verteilt angeordnete Einschuböffnungen für den Bearbeitungsbereich der Bohr- oder Fräswerkzeuge aufweisen.

3. Bearbeitungszentrum nach Anspruch 2, **dadurch gekennzeichnet, dass** die Aufnahmemittel des Werkzeugmagazins für eine Reihe von Bohr- oder Fräswerkzeugen entlang einer Magazinachse so angeordnet sind, dass zwischen benachbarten Aufnahmemitteln einer Werkzeugreihe weitere, sich mit den Werkzeugaufnahmemitteln einer Linie kreuzende Werkzeugaufnahmemittel befinden.

4. Bearbeitungszentrum nach Anspruch 2 oder 3, **dadurch gekennzeichnet, dass** das Werkzeugmagazin mit Ausbuchtungen zur Aufnahme der Einschuböffnungen für Bohr- oder Fräswerkzeuge versehen ist.

5. Bearbeitungszentrum nach einem der Ansprüche 2 bis 4, **dadurch gekennzeichnet, dass** die Werkzeugaufnahmemittel des Werkzeugmagazins Anschlag- oder Rastmittel derart aufweisen, dass sie sich mit entsprechenden Gegenrastmitteln der Bohr- oder Fräsköpfe verbinden.

6. Bearbeitungszentrum nach einem der Ansprüche 1 bis 5, **dadurch gekennzeichnet, dass** der Magazinmanipulator einen das Werkzeugmagazin haltenden Arm oder Ausleger aufweist.

7. Bearbeitungszentrum nach einem der Ansprüche 1 bis 6, **dadurch gekennzeichnet, dass** das Werkzeugmagazin entlang einer Führung zwischen einer Ruheposition und einer Werkzeugübergabeposition verfahrbar ist.

8. Bearbeitungszentrum nach einem der Ansprüche 1 bis 7, **dadurch gekennzeichnet, dass** der Magazinmanipulator einen Rotationsantrieb für das Werkzeugmagazin aufweist.

9. Bearbeitungszentrum nach einem der Ansprüche 2 bis 8, **gekennzeichnet durch** ein Werkzeugmagazin, das Aufnahmemittel, wie einen Werkzeugaufnahmeschacht (8A), für einen Bearbeitungsbereich (6') des Bohr- und Fräswerkzeuges (6) mit einer Einschuböffnung (8C) für den Bearbeitungsbereich (8') aufweist und wobei Haltemittel, wie Rastmittel (10A), vorgesehen sind, die einen Spannbereich (6") des Bohr- und Fräswerkzeuges (6) außerhalb des Aufnahmemittels im Werkzeugmagazin (8) halten.

10. Bearbeitungszentrum nach Anspruch 9, **dadurch gekennzeichnet, dass** das Werkzeugmagazin (8) als Ganzes von dem Magazinmanipulator (9) lösbar gestaltet ist.

## Claims

1. Machining centre
with a drilling or milling head (3) which can be moved together with a drilling or milling tool (6),
with a tool magazine (8) for holding at least one drilling or milling tool with a clamping range (6"), as well as with a tool changer device, including a magazine manipulator, for changing drilling or milling tools (6) between the drilling or milling head (3) and the tool magazine (8) through directly and indirectly transferring the drilling or milling tool (6) from a rest position into a tool-transfer position,
whereby a magazine manipulator (9) is provided to transfer the entire tool magazine (8) from the rest position into the tool transfer position and vice versa, and
the drilling or milling head (3) can be swung and/or moved from a workpiece machining position into the tool transfer position, whereby the drilling or milling tool is in a holder position in the tool magazine (8)
**characterised in that** the tool magazine (8) is rotatably designed around a longitudinal direction defining a rotary axis (8B) and has tool holder shafts (8A) that cross each other perpendicularly to the rotary axis (8B) and at an angle with regard to each other penetrate into the tool magazine (8A) from an insert opening (8C) on the periphery of the tool magazine (8).

2. Machining centre according to claim 1 **characterised in that** the tool magazine comprises at least two holder means each for one drilling or milling tool (6) and **in that** distributed on the circumference of the tool magazine the holder means of the tool magazine has insert openings for the machining range of the drilling or milling tools.

3. Machining centre according to claim 2 **characterised in that** the holder means of the tool magazine for a series of drilling or milling tools is arranged along a magazine axis in such a way that between adjacent holder means of one tool series there are further holder means crossing the tool holder means of one line.

4. Machining centre according to claim 2 or 3 **characterised in that** the tool magazine is provided with projections for taking up the insert openings for drilling or milling tools.

5. Machining centre according to any one of claims 2 to 4 **characterised in** the tool holder means of the tool magazine have stop or locking means of such a type that they connect with corresponding counter-means of the drilling or milling heads.

6. Machining centre according to any one of claims 1 to 5 **characterised in that** the magazine manipulator has an arm or boom holding the tool magazine.

7. Machining centre according to any one of claims 1 to 6 **characterised in that** the tool magazine can be moved along a guide between a rest position and a tool transfer position.

8. Machining centre according to any one of claims 1 to 7 **characterised in that** the magazine manipulator has a rotary drive for the tool magazine.

9. Machining centre according to any one of claims 2 to 8 **characterised by** a tool magazine that has holder means, such as a tool holder shaft (8A) for a machining range (6') of the drilling or milling tool (6) with an insert opening (8C) for the machining range (8') and whereby holding means, such as locking means (10A) are provided which maintain a machining range (6") of the boring and milling tool (6) outside the holder means in the tool magazine (8).

10. Machining centre according to claim 9 **characterised in that** the tool magazine (8) can be detached as a whole from the magazine manipulator (9).

## Revendications

1. Centre d'usinage
avec une tête de perçage ou de fraisage (3) qui est mobile avec un outil de perçage ou de fraisage (6)
avec un magasin d'outils (8) pour recevoir au moins un outil de perçage ou de fraisage présentant une zone de serrage (6"), ainsi qu'avec un système de changement d'outil comprenant un manipulateur d'outil pour changer des outils de perçage ou de fraisage (6) entre la tête de perçage ou de fraisage (3) et le magasin d'outils (8) par transfert direct et immédiat de l'outil de perçage ou de fraisage (6) d'une position de repos dans une position de transfert d'outil,
pour lequel est prévu un manipulateur de magasin (9) transférant tout le magasin d'outils (8) de la position de repos dans la position de transfert d'outil et inversement
et la tête de perçage ou de fraisage (3) est pivotable et/ou mobile d'une position d'usinage de pièce dans la position de transfert de pièce, pour lequel l'outil de perçage ou de fraisage se trouve dans une position de réception dans le magasin d'outils (8)
**caractérisé en ce que** le magasin d'outils (8) est conçu pivotant dans un sens d'extension longitudinale définissant un axe de rotation (8B) et présente des cavités de réception d'outil (8A) se croisant réciproquement qui s'étendent à l'intérieur dans le magasin d'outils (8A) transversalement à l'axe de rotation (8B) et réciproquement dans un angle partant d'une ouverture d'insertion (8C) à la périphérie du magasin d'outils (8).

2. Centre d'usinage selon la revendication 1 **caractérisé en ce que** le magasin d'outils comprend au moins deux moyens de réception pour chaque outil de perçage ou de fraisage (6) et **en ce que** les moyens de réception du magasin d'outils présentent des ouvertures d'insertion disposées réparties sur la périphérie du magasin d'outils pour la zone d'usinage des outils de perçage ou de fraisage.

3. Centre d'usinage selon la revendication 2 **caractérisé en ce que** les moyens de réception du magasin d'outils pour une série d'outils de perçage ou de fraisage sont disposés le long d'un axe de magasin de telle sorte qu'entre les moyens de réception voisins d'une série d'outils se trouvent d'autres moyens de réception d'outils se croisant avec les moyens de réception d'outils d'une ligne.

4. Centre d'usinage selon la revendication 2 ou 3 **caractérisé en ce que** le magasin d'outils est muni d'évasements pour recevoir les ouvertures d'insertion pour les outils de perçage ou de fraisage.

5. Centre d'usinage selon une quelconques des revendications 2 à 4 **caractérisé en ce que** les moyens de réception d'outils du magasin d'outils présentent des moyens de butée ou d'arrêt de telle sorte qu'ils se raccordent au moyens d'arrêt opposés des têtes de perçage ou de fraisage.

6. Centre d'usinage selon une quelconques des revendications 1 à 5 **caractérisé en ce que** le manipulateur de magasin présente un bras ou console retenant le magasin d'outils.

7. Centre d'usinage selon une quelconques des revendications 1 à 6 **caractérisé en ce que** le magasin d'outils est mobile le long d'un guidage entre une position de repos et une position de transfert d'outil.

8. Centre d'usinage selon une quelconques des revendications 1 à 7 **caractérisé en ce que** le manipulateur de magasin présente une commande de rotation pour le magasin d'outils.

9. Centre d'usinage selon une quelconques des revendications 2 à 8 **caractérisé par** un magasin d'outils qui présente des moyens de réception, comme une cavité de réception d'outil (8A), pour une zone d'usinage (6') de l'outil de perçage ou de fraisage (6) avec une ouverture d'insertion (8C) pour la zone d'usinage (8') et pour lequel sont prévus des moyens de fixation, comme des moyens d'arrêt (10A) qui contiennent dans le magasin d'outils (8) une zone de serrage (6") de l'outil de perçage et de fraisage (6) en dehors du moyen de réception.

10. Centre d'usinage selon la revendication 9 **caractérisé en ce que** le magasin d'outils (8) est conçu en tant qu'ensemble détachable du manipulateur de magasin (9).
